# EUROPEAN PATENT SPECIFICATION

(11) **EP 2 981 346 B1**
(45) Date of publication and mention of the grant of the patent: **03.05.2017**
(21) Application number: 14715973.5
(22) Date of filing: 18.03.2014
(51) Int. Cl.: B01D 53/94, F01N 3/20, F01N 3/30, G01N 27/419

(54) **NOX MEASURING SYSTEM AND METHOD**
NOX-MESSSYSTEM UND VERFAHREN
SYSTÈME ET PROCÉDÉ DE MESURE DE NOX

(30) Priority: 03.04.2013 FI 20135316
(43) Date of publication of application: 10.02.2016
(73) Proprietor: Wärtsilä Finland Oy, 65380 Vaasa (FI)
(72) Inventor: LÖVHOLM, Markus, FI-65100 Vaasa (FI); NORDBERG, Daniel, FI-65100 Vaasa (FI); GRANHOLM, Sam, FI-65100 Vaasa (FI)
(74) Representative: Berggren Oy, Helsinki & Oulu
(86) International application number: PCT/FI2014/050201
(87) International publication number: WO 2014/162049

(56) References cited:
- EP-A2- 2 161 569
- WO-A1-2012/001222
- DE-A1-102010 029 262
- US-A1- 2009 151 425
- US-A1- 2012 330 539
- US-A1- 2013 067 892

## Description

### Technical field of the invention

The present invention relates to a NOx measurement system for an internal combustion engine in accordance with the preamble of claim 1. The invention also concerns a method for measuring the concentration of NOx in the exhaust gas of an internal combustion engine, as defined in the preamble of the other independent claim.

### Background of the invention

Due to continuously tightening regulations concerning nitrogen oxide (NOx) emissions of internal combustion engines in ships and power plants, selective catalytic reduction (SCR) systems are becoming more and more common. In SCR systems, correct dosing of reducing agent, which is usually urea, is important for achieving effective NOx reduction and for avoiding ammonia slip. To improve accuracy of the dosing of the reducing agent, an SCR system can be equipped with a NOx-sensor that measures NOx concentration downstream from SCR elements.

Patent application WO 2008043928 A1 discloses an SCR system of a vehicle where a NOx-sensor is placed downstream from an SCR catalyst and the NOx and ammonia concentration of the exhaust gas is continuously monitored. According to the method, an initial amount of urea is injected into the exhaust system. If the engine is running at steady state, the urea dosing is increased by multiplying the initial amount by a coefficient greater than one. After increasing the dosing, NOx and ammonia concentration is measured, and if the measurement shows decreased concentration, the dosing is increased again. This step is repeated until the concentration starts to increase. This is an indication of overdosing, and urea dosing is therefore decreased by multiplying the previous amount by a coefficient smaller than 1. This step is repeated as long as the concentration reduces. When the concentration starts to increase again, the urea dosing is increased. A problem related to continuous NOx measurement is that the lifetime of a sensor that is continuously exposed to the exhaust gas is very limited.

WO 2012001222 A1 discloses a NOx measuring arrangement, in which a NOx-sensor is arranged in a by-pass duct. Exhaust gas of the engine can be introduced into the by-pass duct for measuring the NOx concentration of the exhaust gas. For protecting the NOx-sensor from the harmful effects of the exhaust gas, the NOx-sensor is protected between the measurements by introducing fresh air into the by-pass duct. The NOx-sensor is thus exposed to the exhaust gas only during the measurements. By this arrangement, the lifetime of the NOx-sensor can be increased. However, a remaining problem of the measuring arrangement is that the by-pass duct and the NOx-sensor cool down between the measurements. This means that some components of the exhaust gas may condense on the cold surfaces of the by-pass duct and the NOx-sensor during the measurements. This is harmful especially when fuels with high sulfur content are used. When the exhaust gas condenses on the cold surfaces, sulfuric acid can form, which can cause clogging of the by-pass duct and shorten the lifetime of the NOx-sensor.

### Summary of the invention

An object of the present invention is to provide an improved NOx measurement system for an internal combustion engine. The characterizing features of the measurement system according to the invention are given in the characterizing part of claim 1. Another object of the invention is to provide an improved method for measuring the concentration of NOx in the exhaust gas of an internal combustion engine. The characterizing features of the method are given in the characterizing part of the other independent claim.

The NOx measurement system according to the invention comprises a measurement duct having a first end, which is arranged in an exhaust duct of the engine for receiving exhaust gas, and a second end, which is arranged in the exhaust duct for releasing the exhaust gas after the measurement back into the exhaust duct, a NOx-sensor, which is arranged in the measurement duct, and a purging duct, which is connected to the measurement duct for introducing pressurized air into the measurement duct. The measurement system further comprises means for heating the measurement duct.

In the method according to the invention, exhaust gas is introduced from an exhaust duct of the engine into a measurement duct, in which measurement duct the NOx concentration is measured by a NOx-sensor, and between the measurements pressurized air is introduced into the measurement duct for protecting the NOx-sensor from the exhaust gas. The measurement duct is heated between the measurements for preventing condensation of exhaust gas.

With the measurement system and method according to the invention, condensing of exhaust gas components on the surfaces of the measurement duct and the NOx-sensor can be prevented, which increases the lifetime of the NOx-sensor and helps to prevent clogging of the measurement duct.

The measurement duct can be efficiently heated by the pressurized air, which is heated by the exhaust gas of the engine before being introduced into the measurement duct. The purging duct can comprise a section that is arranged inside the exhaust duct for heating the air that flows through the purging duct.

### Brief description of the drawings

Embodiments of the invention are described below in more detail with reference to the accompanying drawings, in which
Fig. 1 shows schematically an SCR system of an internal combustion engine,
Fig. 2 shows a measurement duct assembly for a NOx-sensor, and
Fig. 3 shows the measurement duct assembly in connection with an exhaust duct of an engine.

### Description of embodiments of the invention

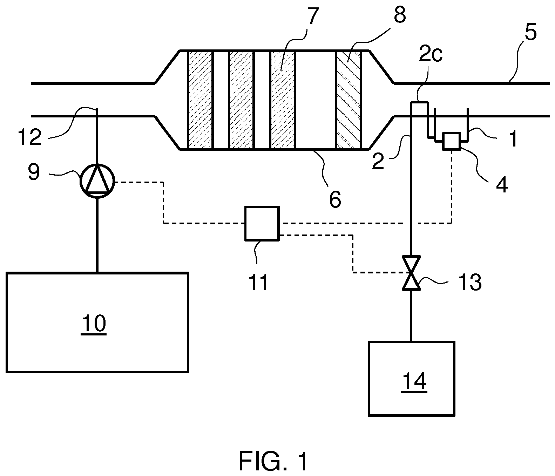

In figure 1 is shown a simplified illustration of a selective catalytic reduction (SCR) system of an internal combustion engine. The SCR system is suitable particularly for large piston engines, such as main or auxiliary engines of ships or engines that are used at power plants for producing electricity. The system comprises a catalytic converter 6 having three SCR elements 7. The SCR elements 7 are ceramic honeycomb structures that are coated with a catalyst material. Urea, which is used as the reducing agent, is injected into the exhaust gas flow upstream from the catalytic converter 6 through a reducing agent injector 12. The urea is stored in a tank 10 and a dosing pump 9 is used for delivering the correct amount of urea solution to the reducing agent injector 12. A control unit 11 is arranged to control the dosing pump 9. The urea injected into the exhaust system mixes with the exhaust gas and breaks up into ammonia and carbon dioxide due to the heat of the exhaust gas. On the surface of the SCR elements 7, ammonia molecules react with NOx and form nitrogen and water. Inside the catalytic converter 6, downstream from the SCR elements 2 there is arranged an oxidation catalyst 8. The purpose of the oxidation catalyst 8 is to oxidize carbon monoxide and unburned hydrocarbons. Also at least part of the excess ammonia oxidizes forming mainly nitrogen oxides and water.

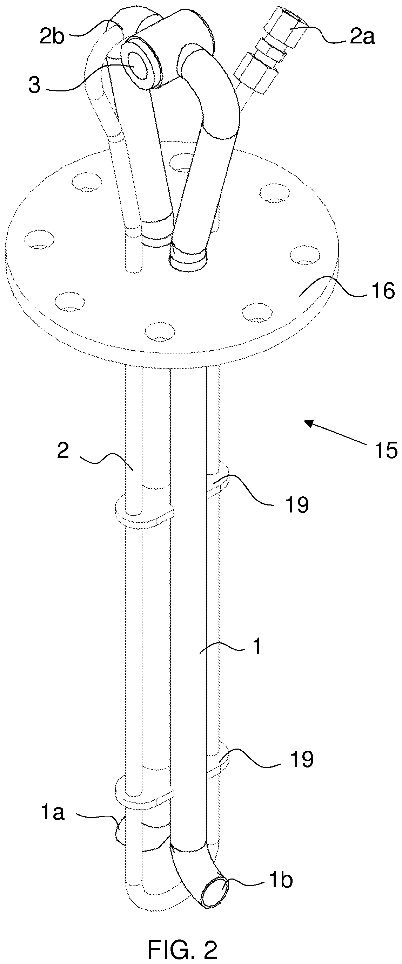

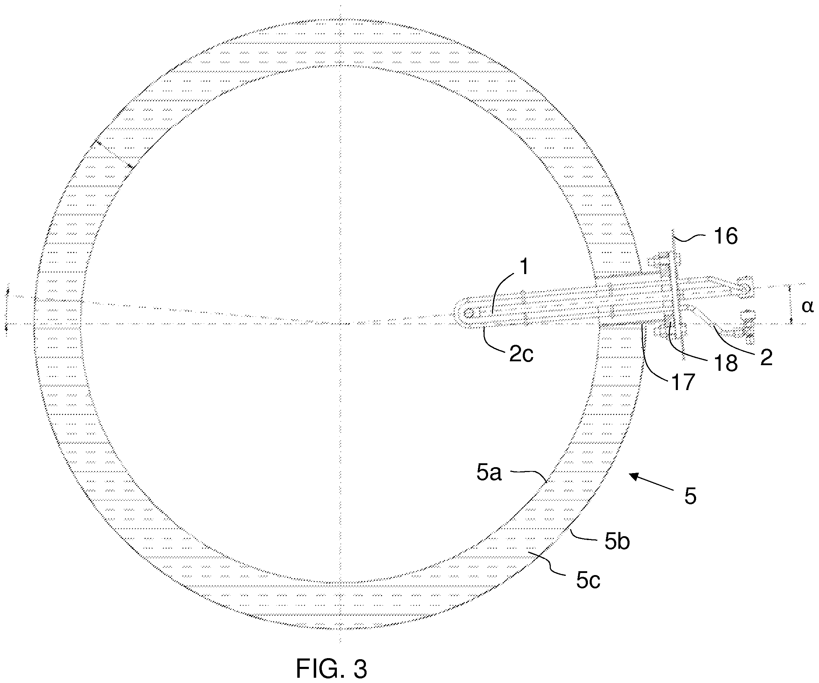

For monitoring the NOx concentration of the exhaust gas after the selective catalytic reduction, a NOx-sensor 4 has been arranged downstream from the catalytic converter 6. Since NOx-sensors 4 are usually cross-sensitive to ammonia, it is also possible to locate the sensor 4 between the SCR elements 7 and the oxidation catalyst 8. The NOx-sensor 4 is located in a measurement duct 1. Figure 2 shows a more detailed view of the measurement duct 1, and in figure 3 is shown the measurement duct 1 in connection with an exhaust duct 5 of the engine. The measurement duct 1 has a first end 1 a and a second 1 b. Both ends of the measurement duct 1 are inside the exhaust duct 5. The first end 1a of the measurement duct 1 is bent and directed towards the exhaust gas stream. Also the second end 1 b of the measurement duct 1 is bent and points towards the downstream end of the exhaust duct 5. The measurement duct 1 can receive exhaust gas through the first end 1a and release the exhaust gas through the second end 1 b back into the exhaust duct 5. A small amount of the exhaust gas that flows in the exhaust duct 5 is forced into the measurement duct 1, in which the NOx concentration of the exhaust gas is measured by the NOx-sensor 4.

The NOx measurement is not continuous, but the NOx concentration is only measured when requested by the control unit 11. When the operating conditions of the engine change, the NOx concentration of the exhaust gas can be measured and the amount of the reducing agent adjusted until correct dosing is achieved. After that, the measurements can be carried out at certain intervals. For protecting the NOx-sensor 4 from the exhaust gas between the NOx measurements, the NOx measurement system is provided with a purging duct 2, which is connected to the measurement duct 1 upstream from the NOx-sensor 4. The outlet 2b of the purging duct 2 is thus between the NOx-sensor 4 and the first end 1 a of the measurement duct 1. Through the purging duct 2, pressurized air can be introduced into the measurement duct 1 between NOx measurements for flushing the measurement duct 1. The air is introduced through the purging duct 2 into the measurement duct 1 at a pressure that is higher than the pressure of the exhaust gas at the measurement point. This ensures that both branches of the measurement duct 1 are emptied. The NOx-sensor 4 is thus protected from the heat and impurities of the exhaust gas. The fresh air that is used for flushing the measurement duct 1 also allows calibration of the NOx-sensor 4. The NOx measurement system is provided with a control valve 13, which is used for controlling air flow from a pressure medium source 14 into the purging duct 2. Before each NOx measurement, the control valve 13 is closed, and exhaust gas can thus flow into the measurement duct 1. After the measurement, the control valve 13 is opened and air injection into the measurement duct 1 is continued until the next NOx measurement. Instead of using a separate air tank 14, as in figure 1, the pressurized air can be instrument air that is also used for other control purposes in the engine, or alternatively charge air from the air intake duct of the engine downstream from the compressor of a turbocharger. The control unit 11 is arranged to control the NOx-sensor 4 and the control valve 13. The control valve 13 can be, for instance, a solenoid valve.

A problem with the prior art solutions has been that although the purge air can increase the lifetime of the NOx-sensor 4, the NOx-sensor 4 has been exposed to condensing exhaust gas because of a cold measurement duct 1. If measurements are carried out at long intervals and exhaust gas is prevented from flowing into the measurement duct 1, the temperature of the measurement duct 1 decreases. When exhaust gas is introduced into the measurement duct 1, it can condense on the cold surfaces of the measurement duct 1 and the NOx-sensor 4. Especially when fuel with high sulfur content is used, this shortens the lifetime of the NOx-sensor 4, since sulfur acid can be formed. According to the invention, the problem is prevented by heating the measurement duct 1. The measurement duct 1 can be heated by the pressurized air that is used for purging the measurement duct 1. In the embodiment of the figures, the purging duct 2 is provided with a section 2c, which is arranged inside the exhaust duct 5. When the pressurized air flows through the purging duct 2, heat is transferred from the exhaust gas to the pressurized air. When the pressurized air is introduced into the measurement duct 2, the air heats the measurement duct 2. During the NOx-measurement sequence, the surfaces of the measurement duct 1 and the NOx-sensor 4 are thus warmer than without heating, and condensation of exhaust gas is thus reduced or prevented. This increases the lifetime of the NOx-sensor 4. The heating effect of the purging air can be affected by varying the length of the section 2c of the purging duct 2 that is arranged inside the exhaust duct 5. If the section 2c in the exhaust duct 5 is made longer, the temperature and the heating effect of the purging air is increased.

The NOx-sensor 4, the measurement duct 1 and the purging duct 2 are arranged in a measurement module 15. The measurement module 15 comprises a connecting flange 16, to which the measurement duct 1 and the purging duct 2 are attached. The measurement duct 1 is a U-shaped pipe, which opens towards the exhaust duct 5. Also the purging duct 2 is a U-shaped pipe, but it opens towards the outside of the exhaust duct 5. The purging duct 2 is connected to the measurement duct 1 at a location that is outside the exhaust duct 5. The measurement duct 1 is provided with a cylindrical mounting piece 3, to which the NOx-sensor 4 can be mounted. The mounting piece 3 is in that part of the measurement duct 1, which is outside the exhaust duct 5. The first end of the purging duct 2 is provided with a connector piece 2a, which allows the purging duct 2 to be easily connected to a pressure medium source. The purging duct 2 could also be provided with an additional branch, which would allow pressurized air to be injected directly into the mounting piece 3 of the NOx-sensor 4, instead of introducing it into the section 2c inside the exhaust duct 5. The additional branch would allow the NOx-sensor 4 to be effectively cleaned from soot. The measurement module 15 further comprises support plates 19, which are used for connecting the measurement duct 1 and the purging duct 2 to each other. The exhaust duct 5 is provided with an installation sleeve 17, which goes through the wall of the exhaust duct 5 and is fastened to the exhaust duct 5 by welding. The exhaust duct 5 comprises an inner pipe 5a, an outer pipe 5b and an insulation layer 5c, which is arranged between the inner pipe 5a and the outer pipe 5b. The outer end of the installation sleeve 17 comprises a flange 18, to which the connecting flange 16 of the measurement module 15 can be attached. The installation sleeve 17 is at an angle α in relation to a horizontal plane. Angle α is suitably 3-5 degrees. The installation sleeve 17 is thus inclined slightly downwards, which allows any condensed exhaust gas to flow into the exhaust duct 5.

It will be appreciated by a person skilled in the art that the invention is not limited to the embodiments described above, but may vary within the scope of the appended claims.

## Claims

1. A NOx measurement system for an internal combustion engine, which measurement system comprises
- an exhaust duct (5) for exhaust gas of an engine,
- a measurement duct (1) having a first end (1 a), which is arranged in the exhaust duct (5) for receiving exhaust gas, and a second end (1b), which is arranged in the exhaust duct (5) for releasing the exhaust gas after the measurement back into the exhaust duct (5),
- a NOx-sensor (4), which is arranged in the measurement duct (1), and
- a purging duct (2), which is connected to the measurement duct (1) for introducing pressurized air into the measurement duct (1),
**characterized in that** for heating the measurement duct (1), the purging duct (2) comprises a section (2c) that is arranged inside the exhaust duct (5) for heating the pressurized air in the purging duct (2) before the air is introduced into the measurement duct (1).

2. A method for measuring the concentration of NOx in the exhaust gas of an internal combustion engine, in which method exhaust gas is introduced from an exhaust duct (5) of the engine into a measurement duct (1), in which measurement duct (1) the NOx concentration is measured by a NOx-sensor (4), and between the measurements pressurized air is introduced into the measurement duct (1) for protecting the NOx-sensor (4) from the exhaust gas, **characterized in that** the measurement duct (1) is heated by the pressurized air between the measurements for preventing condensation of exhaust gas, and that the pressurized air is heated by the exhaust gas of the engine.

3. A method according to claim 2, **characterized in that** the pressurized air is arranged to flow through a duct section (2c) that is inside an exhaust duct (5) of the engine.

## Patentansprüche

1. NOx-Messsystem für einen Verbrennungsmotor, wobei das Messsystem aufweist:
- einen Abgaskanal (5) für Abgas eines Motors,
- einen Messkanal (1) mit einem in dem Abgaskanal (5) angeordneten ersten Ende zur Aufnahme von Abgas (1a) und einem in dem Abgaskanal (5) angeordneten zweiten Ende (1b) zum Freigeben des Abgases nach der Messung zurück in den Abgaskanal (5),
- einen in dem Messkanal (1) angeordneten NOx-Sensor (4), und
- einen mit dem Messkanal (1) verbundenen Spülkanal (2) zum Einleiten von Druckluft in den Messkanal (1),
**dadurch gekennzeichnet, dass** zum Erwärmen des Messkanals (1) der Spülkanal (2) einen innerhalb des Abgaskanals (5) angeordneten Abschnitt (2c) zum Erwärmen der Druckluft in dem Spülkanal (2), bevor die Luft in den Messkanal (1) eingeleitet wird, aufweist.

2. Verfahren zur Messung der NOx-Konzentration in dem Abgas eines Verbrennungsmotors, bei welchem Verfahren Abgas aus einem Abgaskanal (5) des Motors in einen Messkanal (1) eingeleitet wird, in welchem Messkanal (1) die NOx-Konzentration durch einen NOx-Sensor (4) gemessen wird, und zwischen den Messungen Druckluft in den Messkanal (1) eingeleitet wird zum Schutz des NOx-Sensors (4) vor dem Abgas, **dadurch gekennzeichnet, dass** der Messkanal (1) durch die Druckluft zwischen den Messungen zur Verhinderung der Kondensation des Abgases erwärmt wird und die Druckluft durch das Abgas des Motors erwärmt wird.

3. Verfahren nach Anspruch 2, **dadurch gekennzeichnet, dass** die Druckluft so angeordnet ist, dass sie durch einen Kanalabschnitt (2c) strömt, der sich innerhalb eines Abgaskanals (5) des Motors befindet.

## Revendications

1. Système de mesure de NOx pour un moteur à combustion interne, lequel système de mesure comprend
- un tuyau d'échappement (5) pour le gaz d'échappement d'un moteur,
- un tuyau de mesure (1) présentant une première extrémité (1a) qui est agencée dans le tuyau d'échappement (5) pour recevoir le gaz d'échappement, et une seconde extrémité (1b) qui est agencée dans le tuyau d'échappement (5) pour renvoyer le gaz d'échappement, après la mesure, vers l'intérieur du tuyau d'échappement (5),
- un capteur de NOx (4) qui est agencé dans le tuyau de mesure (1), et
- un tuyau de purge (2) qui est relié au tuyau de mesure (1) pour introduire de l'air comprimé dans le tuyau de mesure (1),
**caractérisé en ce que** pour chauffer le tuyau de mesure (1), le tuyau de purge (2) comprend une section (2c) qui est agencée à l'intérieur du tuyau d'échappement (5) pour chauffer l'air comprimé dans le conduit de purge (2) avant que l'air ne soit introduit dans le tuyau de mesure (1).

2. Procédé de mesure de la concentration de NOx dans le gaz d'échappement d'un moteur à combustion interne, dans lequel procédé, du gaz d'échappement est introduit à partir d'un tuyau d'échappement (5) du moteur dans un tuyau de mesure (1), dans lequel tuyau de mesure (1), la concentration de NOx est mesurée par un capteur de NOx (4) et entre les mesures, de l'air comprimé est introduit dans le tuyau de mesure (1) pour protéger le capteur de NOx (4) du gaz d'échappement, **caractérisé en ce que** le tuyau de mesure (1) est chauffé par l'air comprimé entre les mesures pour éviter la condensation de gaz d'échappement et que l'air comprimé est chauffé par le gaz d'échappement du moteur.

3. Procédé selon la revendication 2, **caractérisé en ce que** l'air comprimé est agencé pour s'écouler à travers une section de tuyau (2c) qui est à l'intérieur d'un tuyau d'échappement (5) du moteur.
